# EUROPEAN PATENT SPECIFICATION

(11) **EP 0 947 748 B1**
(45) Date of publication and mention of the grant of the patent: **16.05.2001**
(21) Application number: 97830732.0
(22) Date of filing: 30.12.1997
(51) Int. Cl.: F16K 1/00, F16K 11/083, F23N 1/00

(54) **Cutoff cock for gas burners**
Absperrhahn für Gasbrenner
Robinet d'arrêt pour brûleur à gaz

(43) Date of publication of application: 06.10.1999
(73) Proprietor: MP Fabbrica Rubinetti S.r.l., 25050 Frazione Toline-Pisogne (Brescia) (IT)
(72) Inventor: Amati, Carlo, 23893 Cassano Brianza, (Lecco) (IT)
(74) Representative: Sutto, Luca, Ing.

(56) References cited:
- DE-A- 2 550 219
- FR-A- 1 390 722
- GB-A- 2 267 551
- US-A- 3 884 413

## Description

The present invention relates to a cut-off cock for gas burners.

In particular the cut-off cock constituting the subject of the invention may find application in gas burners for heating or in burners for cooking food for example for gas cooking stoves for domestic use.

As is well known, in particular referring to conventional gas ovens for domestic use, in order to guarantee a constant temperature within the cooking chamber the ovens are conveniently provided with thermostat regulating systems.

The latter comprise in particular a heat sensing device able constantly to determine the temperature reigning within the cooking space and appropriately to command a membrane unit operating on the line feeding the gas to the burner.

In this way, if the temperature measured within the cooking space should differ from the value pre-set by the user, the thermometer would determine an activation of the membrane unit with the consequent opening or closure of the gas supply line so as to obtain respectively a greater or smaller flow of gas to the burner with the effect of a greater or smaller caloric output by the latter.

Ovens or more in general burners fitted with regulating devices of the type briefly described above are widespread on the market and are able to provide good performance in terms of thermal regulation.

Nevertheless it should be noted that traditional devices present numerous drawbacks, foremost among them the non negligible intrinsic cost of a system which must necessarily comprise a heat sensing device as well as a membrane valve that is sufficiently reliable to be able to regulate with continuity, and throughout the working life of the oven, the flow sent on to the burner.

I have also noted that the operating reliability of a system of the type indicated above is linked to the reliability over time both of the membrane unit and of the thermometric sensor; it is clear that a possible failure in just one of these two components would preclude the possibility of reliable operation of the entire regulating system.

In any case, it is important to specify that temperature control is effected through continuous regulations and thus continuous movements of the membrane in order to ensure that the temperature actually reigning within the cooking space remains within a pre-set interval near the temperature set by the user.

Clearly, in each case the temperature within the cooking space is never exactly constant, but varies albeit within a rather limited range.

It is known from document FR-A-1390722 a gas cock comprising a valve body provided with an inlet port connected to the supply line and an outlet port connected to the burner. The valve body defines a seat for receiving a selector element provided with a plurality of channels which may place in fluid communication the inlet port with the outlet port according to a plurality of different flow-rates.In particular the selector can be rotated so as to be placed in different angular positions.In each angular position one of said channels connects the inlet port to the outer port obtaining the corresponding flow from the supply line to the burner.

In this situation, the main object of the present invention is to make available a cut-off cock for gas burners which can be installed on the supply line to the burner in order to assure a heat output by the latter that is perfectly known, both using methane or LPG or other suitable gas without needing continuous thermometric measurements or proportional regulation by valve systems, with membranes or otherwise.

Within this object the invention also intends to provide a cut-off cock able to provide precise regulation to the flow of gas with a structure that is enormously more economical with respect to what is currently employed commercially to attain similar purposes.

This and other object besides which shall be made clearer in the course of the description that follows are essentially reached by a cut-off cock for gas burners according to what is described in the enclosed claims.

Additional characteristics and advantages shall be made more evident by the detailed description of a preferred, but not exclusive, embodiment of a cut-off cock according to the invention.

Such description shall be made hereafter with reference to the accompanying drawings, provided purely by way of non limiting indication wherein:
- Figure 1 is a longitudinal section of a cock according to the present invention whereto is associated operatively a safety valve;
- Figure 2 is a section according to the plane II-II in Figure 1;

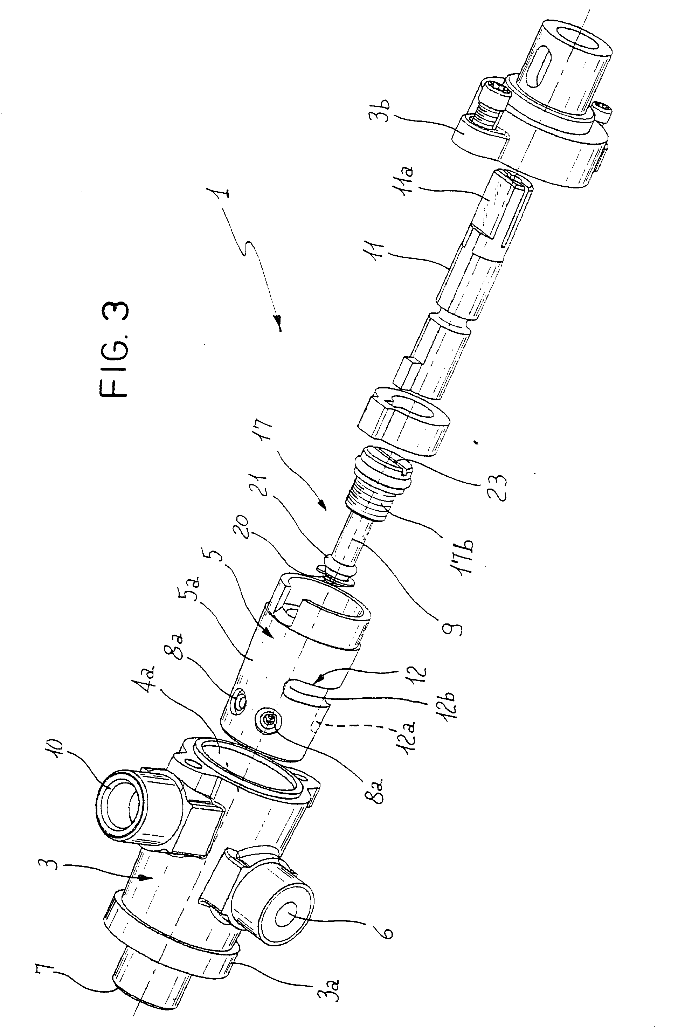

- Figure 3 shows in perspective and in exploded view the cock constituting the subject of the present invention;
- Figure 4 shows in enlarged perspective a detail pertaining to the cock as per Figure 3.

With reference to the accompanying figures, the number 1 has been used to indicate in its entirety a cut-off cock for gas burners according to the present invention.

The cock 1 may in particular be employed on supply lines of gas burners of any nature, both for kitchen ovens and for use in heating units.

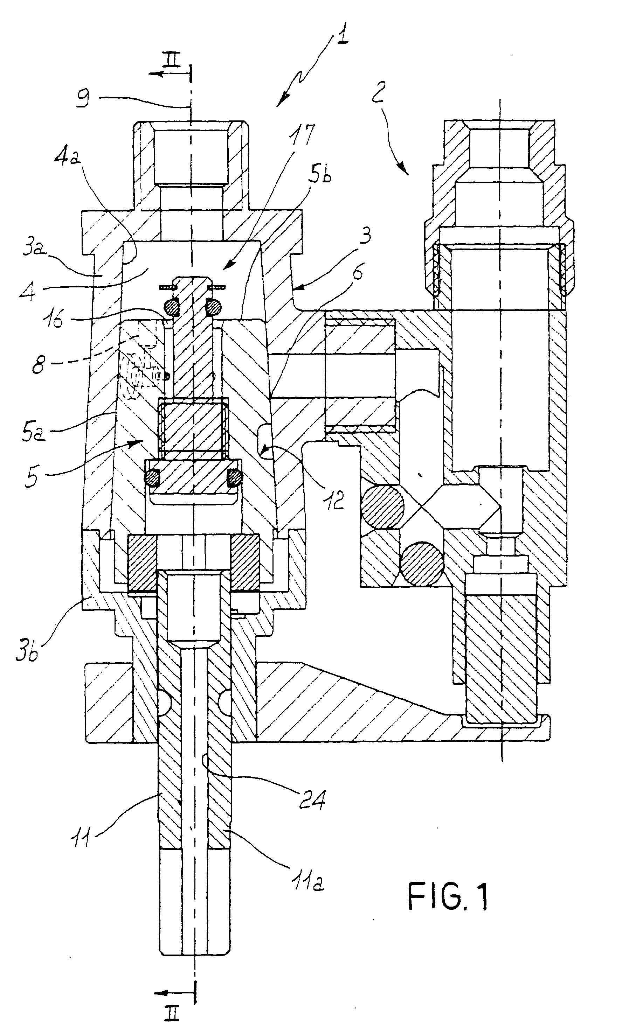

In the example shown in Figure 1 the subject cock is associated in series to a safety valve indicated in its entirety with the number 2 in the accompanying drawings.

It should however be noted that such employment mode is not to be meant in limiting terms, since the cock constituting the subject of the invention can be employed in a gas supply line without co-operation with any valve or similar safety system.

The cut-off cock 1 comprises a valve body 3 defining within it an operating seat 4 set to house a selector element 5. The valve body comprises an input port 6, which receives fluid from a gas supply line and at least one output port 7 which is set to be placed in fluid communication with a burner (not shown in the accompanying drawings).

The selector element 5 associated to the valve body 3 is displaceable within the operating seat 4 between a closed condition, wherein such selector element prevents fluid communication between the input port and the output port thus impeding the passage of gas to the burner, and at least an opening condition, wherein the selector element places in fluid communication the input light with the output light thereby allowing gas to be supplied to the burner according to a pre-set flow rate. According to the present invention the selector element comprises a plurality of connecting channels 8 and it is correspondingly and selectively displaceable in a plurality of different open conditions; in each of these open conditions the selector element 5 defines a fluid communication between the input port and the output port through a pre-set number of said connecting channels 8. Preferably in correspondence with each of said open conditions, the selector element effects a fluid communication between input port 6 and output port 7 through only one of said channels 8. In this case, advantageously each connecting channel 8 shall have its cross section dimensioned so that with the same pressure on the gas supply line and hence with the same pressure in correspondence with the input port, a respective and different flow rate of fluid is established towards the output line corresponding to each of said connecting channels and differing for each of them.

Thanks to the selector element, in practice, a pre-set number of different gas flow rates may be sent to the burner which, therefore, will be able to effect different heat outputs according to the flow rate of fluid sent thereto.

Note that in alternative to what has been described it may be provided for the selector element to be fitted with multiple channels 8 (which may be identical to each other) and for the selector element, passing in the various opening conditions, to determine the passage of fluid simultaneously through one, two, or more of said channels 8. It is clear that even with this solution different pre-set output flow rates would be obtained according to the particular opening condition selected.

Referring specifically now to the embodiment shown, the selector element comprises five connecting channels and thus provides for five different open positions.

Each of these connecting channels is able, in correspondence with the respective open position of the selector element, to effect a corresponding fluid communication between input port 6 and output port 7. The selector element is in this case constructed in such a way that when fluid communication between the input port and the output port is accomplished by a pre-set connecting channel, the remaining connecting channels cannot interfere therewith.

Obviously, depending on the requirements it may be provided for the connecting channels and the corresponding operating open conditions to be in a number greater or smaller than five. Reasonably, in any case, the number of such open conditions shall lie between two and seven.

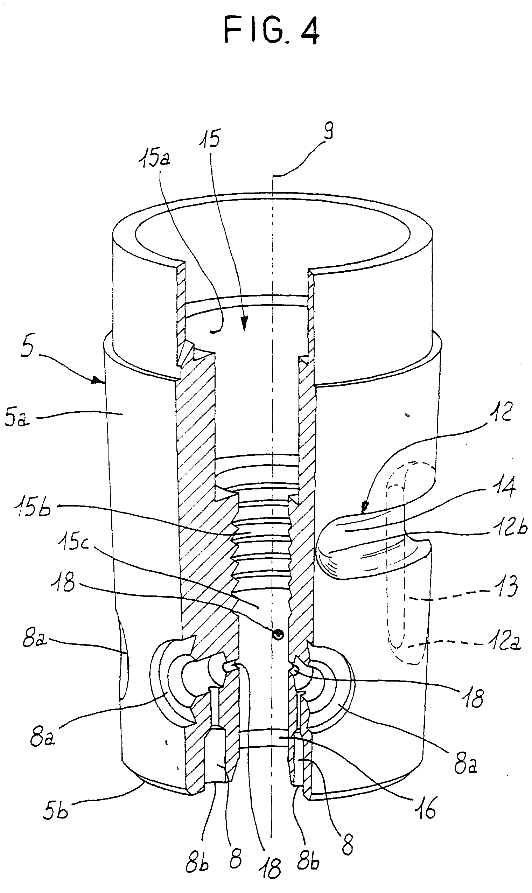

As shown in particular in Figure 4 each connecting channel 8 present a first end 8a which is placed in fluid communication with the input port 6 in correspondence with the corresponding open condition, and a second end 8b, which is constantly in fluid communication with the output port 7.

From an operative point of view, if one desires to put in fluid communication the input port with the output port along a pre-set connecting channel 8, it is necessary to move the selector element 5 in such a way that the first end 8a of the desired connecting channel is brought into alignment with the input channel 6 of the valve body 3.

Preferably, the selector element 5 comprises a revolution body rotatively movable in the operating seat 4 shaped counter thereto. In this way, the selector element passes from the closed condition to each of the various open conditions through rotatory movements around a pre-set axis of rotation 9 coinciding with the longitudinal axis of development of the selector element itself. More in detail, it should be noted that the valve body 3 comprises two semi-shells coupled together to define the mentioned operating seat 4 within which the selector element 5 operates in rotation. Note that the latter is coupled in a gas-tight manner to the valve body and preferably presents an outer side wall 5a of conical conformation which marries the inner side wall 4a of the valve body delimiting the aforementioned operating seat 4.

It should also be specified that the first ends 8a of each of the connecting channels end in correspondence with the outer side wall 5a of the selector element which is active on the input port 6 of the gas.

The second ends 8b of each of the connecting channels 8 end in correspondence with a terminal face 5b of the selector element 5 transverse and in the specific case orthogonal to said axis of rotation 9.

In practice, as can be noted in the drawings, each of the connecting channels has essentially an "L" shape and it is able to draw fluid from the input port 6 sending it towards the output port 7.

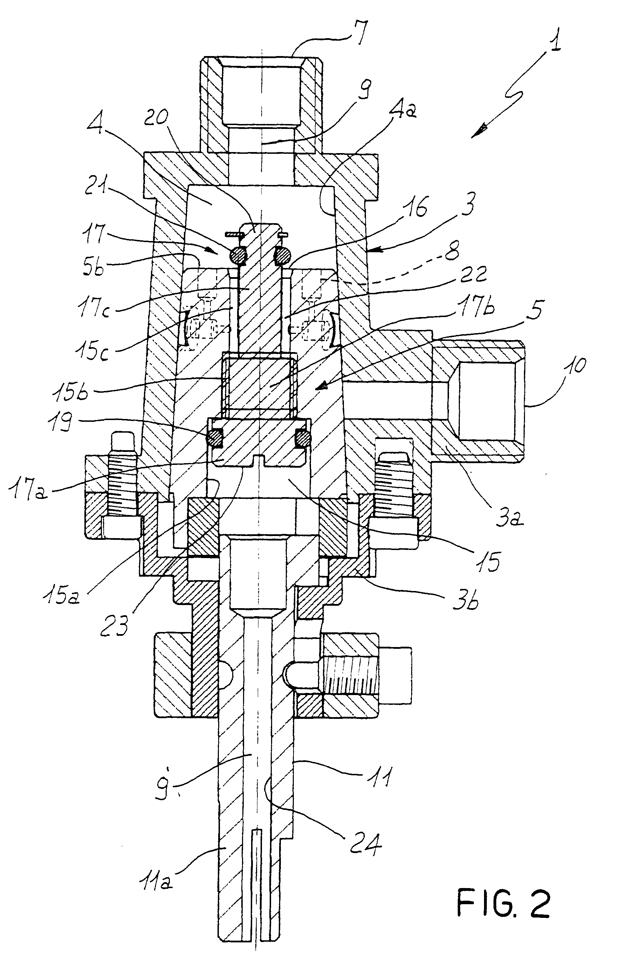

Advantageously, the valve body also comprises an auxiliary output port 10 (see Figure 2) in fluid communication with a supply line of a grill burner (not shown). The selector element 5 housed in the valve body can be moved selectively also in correspondence with an auxiliary open condition wherein the input port 6 is placed exclusively in communication with the mentioned auxiliary output port 10 through an auxiliary channel 12, with the fluid communication between the input port and the output port 7 thereby being excluded.

Note that the subject cock is fitted with a manoeuvring stem 11 angularly integral with the selector element 5 which presents at least a manoeuvring portion 11a emerging at least partially from the valve body 3 and set to receive in engagement a driving body (not shown) which can be commanded by the operator to allow the angular displacement of the selector element in each of the open conditions, including the auxiliary open condition, as well as in correspondence with the closed condition. It should be noted that the auxiliary channel 12 in turn presents a first end 12a, which can be placed in fluid communication with the input port 6, and a second end 12b, which can be placed in fluid communication with the auxiliary output opening 10; more specifically, the auxiliary channel 12 shall be so shaped that, in correspondence with the auxiliary opening condition, the simultaneous fluid communication shall be effected between the auxiliary output opening 10 and the second end 12b of the auxiliary channel 12 as well as between the input port 6 and the first end 12a of the auxiliary channel itself.

Preferably, the auxiliary channel 12 is defined by a groove obtained on the side surface 5 of the selector element 5 and comprises (see Figure 4) a first portion 13 with essentially vertical development as well as a second portion 14, consecutive and in fluid communication with the first portion 13, presenting development transverse to the first portion. In the example shown it is noted that the first and the second portion 13, 14 are orthogonal to each other conferring essentially an "L" shape to the groove obtained on the side surface 5a of the selector element 5. According to a further advantageous aspect of the present invention, it should be noted that the selector element is also fitted with an inner chamber 15 which is defined by a through channel extending axially through the selector element 5 which therefore assumes an essentially tubular conformation.

The inner chamber 15 presents at least one main opening 16 which can be placed in fluid communication with the output port 7.

In correspondence with such main opening 16 operates a breech organ 17 relatively movable with respect to the selector element 5 and active on the main opening 16 in such a way as to move selectively between a closed position, wherein the breech organ 17 prevents a fluid communication between the inner chamber 15 and the output port 7, and an open position, wherein a fluid communication is assured between the inner chamber 15 and the output port 7 through the aforementioned main opening 16.

It should be noted that each of the connecting channels 8 with which the selector element is provided comprises at least one communication passage 18 (see Figure 4) which places in fluid communication an intermediate portion of each channel 8 with the inner chamber 15. In this way, when the selector element is in one of its open positions, a single corresponding connecting channel 8 shall be travelled through by the gas coming from the input port 6 carrying such gas towards the output port 7. Consequently, also the communication passage associated to the channel 8 involved by the gas passage will be travelled through by fluid which will be carried into the inner chamber 15. If the breech organ 7 is in the open position, the gas may also vent through the main opening 16 in practice reaching the output port both as an effect of the passage through the connecting channel 8 and as an effect of the flow through the communication passage 18 and hence through the main opening 16.

In greater detail, it should be specified that the inner chamber 15 comprises a first portion 15a, essentially shaped like a cup having a pre-set radial size. Consecutively to the first portion 15a is placed a second portion 15b whose radial size is smaller than that of the first portion 15a.

Subsequently always in fluid communication with the second portion 15b extends a third portion 15c, whose radial size is smaller than the second portion 15b.

The breech organ 17 operating within the chamber 15 described above presents in turn a head portion 17a engaged slidingly and in a gas tight manner in the first portion 15a of the inner chamber 15. More specifically the head portion 17a is fitted with a radial seal ring 19 and it is able to slide axially according to a pre-set stroke within the first portion 15a. From the head portion 17a extends axially an intermediate portion 17b of smaller radial size than the head portion 17a and engaged to the second portion 15b of the inner chamber 15 in order to allow pre-set axial displacements of the breech organ 17.

By way of example, a coupling can be provided by means of threading, as in the embodiment shown, or by means of bayonet coupling or by means of any other type of coupling which guarantees a relative displacement between breech organ 17 and selector element 5 according to axial strokes of a pre-set dimension.

From the intermediate portion of the breech organ 17 lastly extends a terminal portion 17c having radial size smaller both than the intermediate portion 17b and than the third portion 15c of the inner chamber 15.

Such terminal portion 17c presents a seal end 20 active in closure on the main opening 16. In particular, the seal end 20 of the breech organ 17 emerges from the terminal face 5b of the selector element 5 and comprises a seal organ 21, for example an annular gasket, destined to act in contact on an edge of the main opening 16 in correspondence with the closed position of the breech organ 17 to prevent the passage of fluid from the inner chamber 15 towards the output port 7 of the valve body.

It should be specified that thanks to the radial size of the terminal portion 17c of the breech organ 17 which as has been stated is smaller than that of the third portion 15c of the inner chamber 15, between terminal portion 17c and third portion 15c, an interstice is defined towards which can lead the various communication passages 18, 22 coming from the various connecting channels 8.

It should be noted that in order to drive the breech organ 17 the head portion 17a comprises manoeuvring means 23, for example constituted by a simple notch for a screwdriver or Allen wrench or other similar tool, in order to be able to place in rotation the entire breech organ 17 which, thanks to the threaded coupling between intermediate portion 17b and second portion 15b of the inner chamber 15 can be displaced axially with respect to the selector element 5 moving from the open position to the closed position according to the requirements of the user.

In the specific embodiment shown, it is noted that in order to be able to gain access to the manoeuvring means 23 associated to the head portion 17a of the breech organ 17, the manoeuvring stem 11 angularly integral with the selector element 5 is advantageously fitted with an axial passage 24 for the insertion for instance of a screwdriver.

After the mainly structural description above, hereafter the operation of a cock according to the invention shall be described.

As has been briefly mentioned, the cock 1 is fitted with a selector element 5 able to move the cock itself between a closed position wherein the cock prevents the passage of fluid from the input port 6 to the output port 7 and a plurality of open positions, in correspondence with which the cock allows passages of fluid to the output port 7 according to various flow rates so that the burner placed downstream of the cock can output calories according to pre-set levels, each determined by a corresponding gas flow rate.

To drive in rotation the selector element 5 and hence to move between the various operating conditions of the cock, the user has to act directly or indirectly on the manoeuvring stem 11.

In the closed condition, the selector element 5 is positioned in the valve body in such a way that none of the connecting channels 8 receives fluid from the input port 6. More specifically, none of the first ends 8a of the connecting channels 8 is aligned with the input port 6. Note that in the closed position also the first end 12a of the auxiliary channel 12 is in such a position as not to receive fluid from the input port. In practice, the selector element 5, in closed position, offers to the input port 6 a portion of its outer side wall which acts to close the input port 6 itself preventing any fluid communication with the output port 7 or with the auxiliary output port 10.

Putting the selector element 5 in rotation around its axis, it is possible to align with the input port 6 the first end 8a of one of the five channels 8 with which the selector element itself is fitted. In this way the gas may flow through the input port 6 into the pre-set channel and hence through the second end 8b thereof be made to flow into the operating seat of the valve body and then to exit from the output port 7. Note that the gas entering the connecting channel 8 pre-set by the specific angular position of the selector element 5 also travels through the communication channel 18 associated to said connecting channel 8 thus entering into the inner chamber 15 of the selector element. Depending on whether the breech organ 17 is in the closed or open position, the gas that flows into the inner chamber 15 may remain confined therein or flow out of the main opening 16 of the inner chamber 15 to travel towards the output port 7. In practice, the cock can function according to two different modes: a first mode wherein the breech organ 17 is in closed position and a second mode, wherein the breech organ is in open position. The above is necessary because in general the gases currently utilised for burners are of two types, i.e. methane gas with a specific calorific value of about 9,500 kcal/m³ and LPG or G30 gas with a specific calorific value of about 31,000 kcal/m³.

Note also that in general such fluids are supplied in the distribution lines at different pressures.

The cock according to the invention, thanks to the possibility of moving the breech organ 17 between the closed and the open condition, can adequately operate both with methane gas and with LPG. In the open position of the breech organ 17 for each connecting channel 8 an additional passage of fluid of pre-set size is created which allows to send to the burner an overall quantity of gas such as to supply for each open position the same calorific value to the burner itself.

Obviously it will be up to the installer, when mounting the stove or the burner, to position the breech organ 17 appropriately, which is accomplished simply by acting with a screwdriver on the head portion 17a of the breech organ 17 itself, so that the latter can be in the corresponding position according to the type of gas in use. In practice, the breech organ 17 will be in the closed position when the cock operates on lines set to function with LPG gas and vice versa it will be in open conditions when methane is used as a gas.

As stated, by moving the selector element 5 into the various open positions in each case one obtains a flow of pre-set and different flow rates of gas to the burner which will thereby yield in output corresponding quantities of heat known a priori. It is evident that, if the volume wherein the burner operates is known, it will immediately be possible to derive the temperature that the burner will be able to yield in each of the open conditions of the cock, with no need for continuous regulation systems, thermostats and membrane valves and the like. It should lastly be noted that, always operating the selector element 5 in rotation, the latter can be brought in correspondence with its auxiliary open condition. In such a condition all the connecting channels 8 are excluded from the passage of fluid, whilst the first end 12a of the auxiliary channel 12 is placed in alignment and in communication with the input port 6, in such a way that the gas travels through the auxiliary channel 12 itself, and is sent on to the auxiliary output port which in turn is placed in fluid communication with the supply line of a grill burner. In practice, the cock according to the invention also allows to send gas to a grill type burner excluding any other burner present in the oven to which the cock constituting the subject of the invention is associated. The invention achieves important advantages.

In the first place, it should be noted that the cock according to the present invention is able to operate in a completely different mode from cocks of a traditional type. In particular, referring for instance to traditional gas fired ovens for kitchens, it is no longer necessary to install thermometric measuring systems and corresponding proportional valves commanded thereby to maintain at a constant level the temperature reigning within the oven; on the contrary, according to the invention, the cock provides for different operating conditions wherein the cock itself allows to send to the burner quantities of gas pre-set in the unit of time to obtain the desired quantities of heat from the burner. Clearly knowing the volume of the oven, its thermal dispersions and the calorific value of the gas in use, the cock constituting the subject of the invention will allow to establish, in correspondence with each open condition, a well pre-set temperature within the cooking chamber of the oven itself without any need for continuous control and regulation systems.

For this reason, the cock according to the invention is also extremely reliable from an operational point of view.

In spite of the undoubted advantages indicated above, the subject cock is nevertheless provided with a very simple structure comprising essentially three fundamental components: valve body, selector element and breech organ which assure all the operating capabilities of the cock.

Note that the invention is also advantageous in its more specific aspects.

The subject cock, as mentioned previously, advantageously allows to operate adequately both with LPG gas and with methane gas and to feed a grill burner simultaneously excluding other burners which may be present in the oven without thereby entailing particular complications in the structure of the cock itself.

## Claims

1. Cutoff cock for gas burners comprising:
- a valve body (3) having at least one input port (6), set to be placed in fluid communication with a gas supply line, and at least one output port (7), set to be placed in fluid communication with a burner;
- a selector element (5) operatively associated to the valve body and displaceable between at least one closed condition, wherein the selector element (5) prevents a fluid communication between the input port (6) and the output port (7), and at least one open condition, wherein the selector element (5) places in fluid communication the input port (6) with the output port (7);
- said selector element (5) defining an inner chamber (15) having at least one main opening (16) which can be placed in fluid communication with said output port (7) of the valve body;
- said selector element (5) presenting also a plurality of connecting channels (8) and being displaceable selectively in a plurality of different open conditions, in correspondence with each of said open conditions such selector element defining a fluid communication between the input port (6) and output port (7) through a pre-set number of said connecting channels (8), characterized in that the selector element further comprises:
- a breech organ (17) movable with respect to said inner chamber (15) and active on said main opening (16) to be displaced selectively between a closed position, wherein the breech organ (17) prevents a fluid communication between the inner chamber (15) and the output port (7), and an open position, wherein a fluid communication is assured between the inner chamber (15) itself and said output port (7);
- said selector element (5) comprising at least one communication passage (18) corresponding to each of said connecting channels (8) and set to effect a fluid communication between the respective connecting channel and said inner chamber (15).

2. Cock according to claim 1, characterised in that in correspondence with each of said open conditions, the selector element (5) effects a fluid communication between input port (6) and output port (7) through only a respective one of said connecting channels (8).

3. Cock according to claim 1, characterised in that each of said connecting channels (8), at equal pressures on the gas supply line, defines a respective fluid flow rate towards the output port (7).

4. Cock according to claim 1, characterised in that between two and seven of said open operating conditions are provided for, in correspondence with each of said operating conditions being provided a respective connecting channel (8) between input port (6) and output port (7).

5. Cock according to any one of the claims from 1 to 4, characterised in that each connecting channel (8) presents a first end (8a), which can be placed in fluid communication with the input port (6) in correspondence with a pre-set open condition, and a second end (8b), which is constantly in fluid communication with said output port (7).

6. Cock according to claim 1, characterised in that the selector element (5) is a revolution body movable rotatively in an operating seat (4) counter-shaped thereto defined by the valve body, said selector element (5) passing from the closed condition to each of said open conditions through rotatory motions around a pre-set axis (9).

7. Cock according to claim 6, characterised in that it comprises a manoeuvring stem (11) angularly integral with said selector element (5) and presenting at least one manoeuvring portion (11a) emerging at least partially from said valve body and pre-set to receive in engagement a drive body commandable by a user to allow the angular displacement of the selector element (5) in each of said open conditions and in said closed condition.

8. Cock according to claim 1, characterised in that the valve body comprises an auxiliary output port (19) in fluid communication with a supply line of a grill burner, said selector element (5) being selectively movable also in correspondence with an auxiliary open condition wherein the input port is placed exclusively in fluid communication with said auxiliary output port (10).

9. Cock according to claim 8, characterised in that the selector element (5) comprises an auxiliary channel (12) having a first end (12a) which can be placed in fluid communication with said input port (6), and a second end (12b), which can be placed in fluid communication with said auxiliary output opening (10).

10. Cock according to claim 9, characterised in that the auxiliary channel (12) is defined by a groove obtained on an outer lateral surface (5a) of the selector element (5) itself.

11. Cock according to claim 10, characterised in that said auxiliary channel (12) comprises a first portion (13) with essentially vertical development and a second portion (14), consecutive and in fluid communication with said first portion (13), presenting transverse development with respect to the first portion (13).

12. Cock according to claim 1, characterised in that said selector element (5) is coupled rotationally and in a gas tight manner to the valve body.

13. Cock according to claims 5 and 11, characterised in that the selector element (5) presents an outer lateral surface (5a) of conical conformation coupled in sliding relation within said operating seat (14).

14. Cock according to claim 1, characterised in that the inner chamber (15) is defined by a through channel extending axially through the selector element (5) and presenting a first portion (15a) having a pre-set radial size, a second portion (15b) consecutive to the first portion (15a) and having smaller radial size than the latter, and a third portion (15c), consecutive to the second portion and having smaller radial size than the second portion.

15. Cock according to claim 14, characterised in that the breech organ (17) presents a head portion (17a) engaged in a sliding and gas-tight manner within said first portion (15a) of the inner chamber (15), an intermediate portion (17b), consecutive to the head portion (17a) and coupled to the second portion (15b) of the inner chamber (15) and a terminal portion (17c) with smaller radial size than the third portion (15c) of the inner chamber (15), said terminal portion (17c) having a seal end (20) active on the main opening (16).

16. Cock according to claim 15, characterised in that said seal end (20) of the terminal portion (17c) emerges from an end face (5b) of the selector element (5) and comprises at least one seal organ (21) destined to act in closure of the main opening (16) in correspondence with the closed position of the breech organ (17).

17. Cock according to claim 16, characterised in that between the terminal portion (17c) of the breech organ (17) and the third portion (15c) of the inner chamber (15) an interstice (22) towards which leads each of the communication passages (18) associated to each of said connecting channels (8) is defined.

18. Cock according to claim 17, characterised in that the head portion (17a) of the breech organ (17) comprises manoeuvring means (23) accessible by a user to displace the breech organ (17) itself from the closed position to the open position.

## Patentansprüche

1. Absperrhahn für Gasbrenner, umfassend:
- ein Ventilgehäuse (3) mit mindestens einer Eintrittsöffnung (6), bereitgestellt, um mit einer Gaszufuhrleitung in Strömungsverbindung gesetzt zu werden und mindestens eine Austrittsöffnung (7), die bereitgestellt ist, mit einem Brenner in Strömungsverbindung zu treten,
- mindestens ein Wählelement (5), das wirksam dem Ventilgehäuse zugeordnet und zwischen mindestens einer Schließstellung, in der das Wählelement (5) eine Strömungsverbindung zwischen der Eintrittsöffnung (6) und der Austrittsöffnung (7) sperrt, und mindestens einer Offenstellung verschiebbar ist, in der das Wählelement (5) die Eintrittsöffnung (6) mit der Austrittsöffnung (7) in Strömungsverbindung setzt;
- wobei das Wählelement (5) eine Innenkammer (15) mit mindestens einer Hauptöffnung (16) festlegt, die mit der Austrittsöffnung (7) des Ventilgehäuses in Strömungsverbindung gesetzt werden kann;
- wobei das Wählelement (5) auch eine Vielzahl von Verbindungskanälen (8) aufweist und wahlweise in eine Vielzahl von verschiedenen Offenstellungen verschiebbar ist, wobei im Bereich einer jeden der Offenstellungen das Wählelement eine Strömungsverbindung zwischen der Eintrittsöffnung (6) und der Austrittsöffnung (7) über eine vorgegebene Anzahl von Verbindungskanälen (8) festlegt, dadurch gekennzeichnet, dass das Wählelement überdies umfasst:
- ein Verschlussorgan (17), das bezüglich der Innenkammer (15) bewegbar ist und auf die Hauptöffnung (16) wirkt, um sich wahlweise zwischen einer Schließstellung, in der das Verschlussorgan (17) eine Strömungsverbindung zwischen der Innenkammer (15) und der Austrittsöffnung (7) verhindert, und einer Offenstellung zu bewegen, in der eine Strömungsverbindung zwischen der Innenkammer (15) selbst und der Austrittsöffnung (7) sichergestellt ist;
- wobei das Wählelement (5) mindestens einen Verbindungsdurchtritt (18) umfasst, der an einem jeden der Verbindungskanäle (8) entspricht und der bereitgestellt ist, eine Strömungsverbindung zwischen dem entsprechenden Kanal und der Innenkammer (15) herzustellen.

2. Absperrhahn nach Anspruch 1, dadurch gekennzeichnet, dass im Bereich einer jeden der Offenstellungen das Wählelement (5) eine Strömungsverbindung zwischen der Eintrittsöffnung (6) und der Austrittsöffnung (7) über einen einzigen der entsprechenden Verbindungskanäle (8) herstellt.

3. Absperrhahn nach Anspruch 1, dadurch gekennzeichnet, dass jeder der Verbindungskanäle (8) bei Druckgleichheit auf der Gaszufuhrlinie einen entsprechende Gasdurchfluss in Richtung der Austrittsöffnung (7) festlegt.

4. Absperrhahn nach Anspruch 1, dadurch gekennzeichnet, dass von zwei bis sieben solcher wirksamen Offenstellungen vorgesehen sind, wobei im Bereich einer jeden dieser wirksamen Stellungen ein entsprechender Verbindungskanal (8) zwischen Eintrittsöffnung (6) und Austrittsöffnung (7) vorgesehen ist.

5. Absperrhahn nach einem jeden der Ansprüche von 1 bis 4, dadurch gekennzeichnet, dass jeder Verbindungskanal (8) ein erstes Ende (8a), das mit der Eintrittsöffnung (6) bei einer vorgegebenen Offenstellung in Strömungsverbindung gesetzt werden kann, und ein zweites Ende (8b) aufweist, das mit der Austrittsöffnung (7) ständig in Strömungsverbindung liegt.

6. Absperrhahn nach Anspruch 1, dadurch gekennzeichnet, dass das Wählelement (5) ein Rotationskörper ist, der in einem, zu demselben gegenprofilierten, wirksamen Sitz (4) drehbar beweglich ist, der durch das Ventilgehäuse festgelegt ist, wobei das Wählelement (5) von der Schließstellung in jede der Offenstellungen über Drehbewegungen um eine vorgegebene Achse (9) übergeht.

7. Absperrhahn nach Anspruch 6, dadurch gekennzeichnet, dass er eine Betätigungsstange (11) umfasst, die am Wählelement (5) drehfest liegt und mindestens einen Betätigungsabschnitt (11a) aufweist, der nur teilweise vom Ventilgehäuse vorsteht und bereitgestellt ist, mit einem Antriebskörper in Eingriff zu kommen, der durch eine Bedienungsperson steuerbar ist, um die Winkelverstellung des Wählelementes (5) in jeder der Offenstellungen und in der Schließstellung zu erlauben.

8. Absperrhahn nach Anspruch 1, dadurch gekennzeichnet, dass das Ventilgehäuse eine Hilfsaustrittsöffnung (10) in Strömungsverbindung mit einer Zufuhrleitung eines Grillbrenners umfasst, wobei das Wählelement (6) wahlweise auch im Bereich einer Hilfsoffenstellung verstellbar ist, in der die Eintrittsöffnung ausschließlich in Strömungsverbindung mit der Hilfsaustrittsöffnung (10) gesetzt ist.

9. Absperrhahn nach Anspruch 8, dadurch gekennzeichnet, dass das Wählelement (5) einen Hilfskanal (12) umfasst, der ein erstes Ende (12a), das in Strömungsverbindung mit der Eintrittsöffnung (6) gesetzt werden kann, und ein zweites Ende (12b) auf, das mit der Hilfsaustrittsöffnung (10) in Strömungsverbindung gesetzt werden kann.

10. Absperrhahn nach Anspruch 9, dadurch gekennzeichnet, dass der Hilfskanal (12) durch eine Nut festgelegt ist, die an einer seitlichen Außenfläche (5a) des Wählelementes (5) selbst ausgenommen ist.

11. Absperrhahn nach Anspruch 10, dadurch gekennzeichnet, dass der Hilfskanal (12) einen ersten sich im wesentlich vertikal erstreckenden Abschnitt (13) und einen zweiten, nachfolgenden Abschnitt (14) umfasst, der sich mit dem ersten Abschnitt (13) in Strömungsverbindung befindet, der einen gegenüber dem ersten Abschnitt (13) querliegende Abwicklung aufweist.

12. Absperrhahn nach Anspruch 1, dadurch gekennzeichnet, dass das Wählelement (5) drehbar und gasdicht mit dem Ventilgehäuse gekoppelt ist.

13. Absperrhahn nach Anspruch 5 und 11, dadurch gekennzeichnet, dass das Wählelement (5) eine seitliche Außenfläche (5a) kegeliger Ausbildung aufweist, die gleitend im wirksamen Sitz (14) gekoppelt ist.

14. Absperrhahn nach Anspruch 1, dadurch gekennzeichnet, dass die Innenkammer (15) durch einen durchgehenden Kanal festgelegt ist, der sich axial durch das Wählelement (5) erstreckt und einen ersten Abschnitt (15a) mit einem vorgegebenen, radialen Platzbedarf, einen zweiten, auf den ersten Abschnitt (15a) folgenden Abschnitt (15b) mit einem gegenüber dem ersteren kleineren radialen Platzbedarf und einen dritten Abschnitt (15c) aufweist, der dem zweiten Abschnitt folgt und einen im über dem zweiten Abschnitt kleineren, radialen Platzbedarf aufweist.

15. Absperrhahn nach Anspruch 14, dadurch gekennzeichnet, dass das Verschlussorgan (17) einen Kopfabschnitt (17a), der gleitend und gasdicht im ersten Abschnitt (15a) der Innenkammer (15) in Eingriff steht, einen Zwischenabschnitt (15b) der dem Kopfabschnitt (17a) folgt und mit dem zweiten Abschnitt (15b) der Innenkammer (15) gekoppelt ist, und einen Endabschnitt (17c) mit einem radialen, gegenüber dem dritten Abschnitt (15c) der Innenkammer (15) kleineren Platzbedarf aufweist, wobei der Endabschnitt (17c) ein auf die Hauptöffnung (16) wirkendes Abdichtende (20) besitzt.

16. Absperrhahn nach Anspruch 15, dadurch gekennzeichnet, dass das Dichtende (20) des Endabschnittes (17c) von einer endseitigen Stirnfläche (5b) des Wählelementes (5) hervorsteht und mindestens ein Dichtorgan (21) umfasst, das dazu bestimmt ist, die Hauptöffnung (16) im Bereich der Schließstellung des Verschlussorgans (17) zu schließen.

17. Absperrhahn nach Anspruch 16, dadurch gekennzeichnet, dass zwischen dem Endabschnitt (17c) des Verschlussorgans (17) und dem dritten Abschnitt (15c) der Innenkammer (15) ein Zwischenraum (22) festgelegt ist, in welchem jeder der Verbindungsabschnitte (18) mündet, die jeweils den Verbindungskanälen (18) zugeordnet sind.

18. Absperrhahn nach Anspruch 17, dadurch gekennzeichnet, dass der Kopfabschnitt (17a) des Verschlussorgans (17) Betätigungsmittel (23) umfasst, die seitens einer Bedienungsperson zugänglich sind, um das Verschlussorgan (17) selbst von der Schließstellung in die Offenstellung zu verschieben.

## Revendications

1. Robinet d'arrêt pour brûleurs à gaz comprenant:
- un corps de soupape (3) ayant au moins une lumière d'entrée (6), destinée à être mise en communication de fluide avec une ligne d'alimentation en gaz et au moins une lumière de sortie (7), destinée à être mise en communication de fluide avec un brûleur;
- un élément sélecteur (5) associé de manière opérationnelle au corps de soupape et susceptible d'être déplacé entre au moins une position de fermeture dans laquelle l'élément sélecteur (5) empêche la communication de fluide entre la lumière d'entrée (6) et la lumière de sortie (7), et au moins une condition d'ouverture, dans laquelle l'élément sélecteur (5) met en communication de fluide la lumière d'entrée (6) avec la lumière de sortie (7);
- ledit élément sélecteur (5) définissant un compartiment intérieur (15) ayant au moins une ouverture principale (16) qui peut être mise en communication de fluide avec ladite lumière de sortie (7) du corps de soupape;
- ledit élément sélecteur (5) présentant également une pluralité de canaux de liaison (8) et étant susceptible de déplacement sélectif dans une pluralité de conditions différentes d'ouverture, cet élément sélecteur définissant, en concordance avec chacune desdites conditions d'ouverture, une communication de fluide entre la lumière d'entrée (6) et la lumière de sortie (7) à travers un nombre prédéterminé desdits canaux de liaison, caractérisé en ce que l'élément sélecteur comporte en outre:
- un organe obturateur (17) mobile par rapport audit compartiment intérieur (15) et actif sur ladite ouverture principale (16) pour être déplacé sélectivement entre une position de fermeture, à laquelle l'organe obturateur (17) empêche la communication de fluide entre le compartiment intérieur (15) et la lumière de sortie (7), et une condition d'ouverture, dans laquelle la communication de fluide entre la chambre intérieure (15) elle-même et ladite lumière de sortie (7) est assurée;
- ledit élément sélecteur (5) comprenant au moins un passage de communication (18) correspondant à chacun desdits canaux de liaison (8) et destiné à effectuer une communication de fluide entre le canal de liaison respectif et ladite chambre intérieure (15).

2. Robinet selon la revendication 1, caractérisé en ce que l'élément sélecteur (5) effectue, en concordance avec chacune desdites conditions d'ouverture, une communication de fluide entre la lumière d'entrée (6) et la lumière de sortie (7) à travers un seul canal respectif desdits canaux de liaison (8).

3. Robinet selon la revendication 1, caractérisé en ce que chacun desdits canaux de liaison (8), à pressions égales sur la ligne d'alimentation en gaz, définit un débit de fluide respectif vers la lumière de sortie (7).

4. Robinet selon la revendication 1, caractérisé en ce que le nombre prévu desdites conditions fonctionnelles ouvertes se situe entre deux et sept, en concordance avec chacune desdites conditions fonctionnelles étant prévu un canal respectif (8) de liaison entre la lumière d'entrée (6) et la lumière de sortie (7).

5. Robinet selon l'une quelconque des revendications 1 à 4, caractérisé en ce que chaque canal de liaison (8) présente une première extrémité (8a) qui peut être mise en communication de fluide avec la lumière d'entrée (6) en concordance avec une condition d'ouverture préétablie, et une seconde extrémité (8b) qui est constamment en communication de fluide avec ladite lumière de sortie (7).

6. Robinet selon la revendication 1, caractérisé en ce que l'élément sélecteur (5) est un corps de révolution mobile en rotation dans un logement opérationnel (4) dont la forme épouse celle définie par le corps de soupape, ledit élément sélecteur (5) passant de la condition de fermeture à chacune desdites conditions d'ouverture à travers des mouvement rotatifs autour d'un axe prédéterminé (9).

7. Robinet selon la revendication 6, caractérisé en ce qu'il comporte une tige de manoeuvre (1) solidaire de manière angulaire audit élément sélecteur (5) et présentant au moins une portion de manoeuvre (11a) faisant saillie au moins partiellement dudit corps de soupape et destinée à recevoir en engagement un corps d'entraînement qui doit être commandé par un utilisateur pour permettre le déplacement angulaire de l'élément sélecteur (5) dans chacune desdites conditions d'ouverture et dans ladite condition de fermeture.

8. Robinet selon la revendication 1, caractérisé en ce que le corps de soupape comporte une lumière de sortie auxiliaire (19) en communication de fluide avec une ligne d'alimentation d'un brûleur type gril, ledit élément sélecteur (5) étant mobile sélectivement également en correspondance d'une condition d'ouverture auxiliaire dans laquelle la lumière d'entrée est mise exclusivement en communication de fluide avec ladite lumière de sortie auxiliaire (10).

9. Robinet selon la revendication 8, caractérisé en ce que l'élément sélecteur (5) comporte un canal auxiliaire (12) ayant une première extrémité (12a) qui peut être mise en communication de fluide avec ladite lumière d'entrée (6), et une seconde extrémité (12b), qui peut être mise en communication de fluide avec ladite ouverture de sortie auxiliaire (10).

10. Robinet selon la revendication 9, caractérisé en ce que le canal auxiliaire (12) est défini par une rainure obtenue sur la surface latérale extérieure (5a) de l'élément sélecteur (5) lui-même.

11. Robinet selon la revendication 10, caractérisé en ce que ledit canal auxiliaire (12) comporte une première portion (13) s'étendant essentiellement verticalement et une deuxième portion (14) consécutive à la première portion (13) et en communication de fluide avec cette dernière, présentant une extension transversale par rapport à la première portion (13).

12. Robinet selon la revendication 1, caractérisé en ce que ledit élément sélecteur (5) est accouplé en rotation, et de manière étanche au gaz, au corps de soupape.

13. Robinet selon les revendications 5 et 11, caractérisé en ce que l'élément sélecteur (5) présente une surface latérale extérieure (5a) de conformation conique accouplée par coulissement dans ledit logement opérationnel (14).

14. Robinet selon la revendication 1, caractérisé en ce que le compartiment intérieur (15) est défini par un canal de passage s'étendant en sens axial à travers l'élément sélecteur (5) et présentant une première portion (15a) ayant une dimension radiale préétablie, une deuxième portion (15b) consécutive à la première portion (15a) et ayant une dimension radiale plus petite que cette dernière, et une troisième portion (15c), consécutive à la deuxième portion et ayant une dimension radiale plus petite que la deuxième portion.

15. Robinet selon la revendication 14, caractérisé en ce que l'organe obturateur (17) présente une portion de tête (17a) engagée de manière coulissante et étanche au gaz dans ladite première portion (15a) du compartiment intérieur (15), une portion intermédiaire (17b), consécutive à la portion de tête (17a) et accouplée à la deuxième portion (15b) du compartiment intérieur (15) et une portion terminale (17c) de dimension radiale plus petite que la troisième portion (15c) du compartiment intérieur (15), ladite portion terminale (17c) ayant une extrémité étanche (20), active sur l'ouverture principale (16).

16. Robinet selon la revendication 15, caractérisé en ce que ladite extrémité étanche (20) de la portion terminale (17c) fait saillie d'une face d'extrémité (5b) de l'élément sélecteur (5) et comporte au moins un organe d'étanchéité (21) destiné à agir, à la fermeture de l'ouverture principale (16), en correspondance de la position de fermeture de l'organe obturateur (17).

17. Robinet selon la revendication 16, caractérisé en ce qu'un interstice (22) est défini entre la portion terminale (17c) de l'organe obturateur (17) et la troisième portion (15c) du compartiment intérieur (15), vers cet interstice débouchant chacun des passages de communication (18) associés à chacun desdits canaux de liaison (8).

18. Robinet selon la revendication 17, caractérisé en ce que la portion de tête (17a) de l'organe obturateur (17) comporte des moyens de manoeuvre (23) accessibles par un utilisateur pour déplacer l'organe obturateur (17) lui-même de la position fermée à la position ouverte.
